# EUROPEAN PATENT APPLICATION

(11) **EP 4 730 487 A1**
(43) Date of publication of application: **22.04.2026**
(21) Application number: 25762440.3
(22) Date of filing: 06.02.2025
(51) Int. Cl.: H01M 10/6551, H01M 10/613, H01M 50/211, H01M 10/658, H01M 50/249

(54) **BATTERY MODULE, AND BATTERY PACK AND VEHICLE INCLUDING SAME**

(30) Priority: 27.02.2024 KR 20240028334
(71) Applicant: LG Energy Solution, Ltd., Seoul 07335 (KR)
(72) Inventor: KIM, Kwang-Mo, Daejeon 34122 (KR); JUNG, Hye-Mi, Daejeon 34122 (KR)
(74) Representative: Plasseraud IP
(86) International application number: PCT/KR2025/099298
(87) International publication number: WO 2025/183525

(57) **Abstract**

The present disclosure relates to a battery module including: a cell assembly including a plurality of battery cells; a module case configured to store the cell assembly; and a thermally conductive adhesive interposed between the cell assembly and the module case and configured such that a thermal-propagation inhibition section, at least a portion of which is thermally decomposed at a reference temperature, gradually expands.

## Description

### TECHNICAL FIELD

The present disclosure relates to a battery module, and a battery pack and vehicle including the same.

This application is based on and claims priority from Korean Patent Application No. 10-2024-0028334, filed on February 27, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel depending in order to increase the charge/discharge capacity.

When configuring the battery pack by connecting a plurality of battery cells in series/parallel, it is common to preferentially form a battery module including at least one battery cell and then add other components to one or more battery modules, thereby configuring a battery pack or battery rack. Alternatively, a battery pack has recently been manufactured in a cell-to-pack type in which a plurality of battery cells are directly stored in a pack housing, instead of being modularized.

Meanwhile, in the case of a conventional battery module, a thermally conductive adhesive (thermal resin, etc.) may be applied to one side of a cell assembly in which the battery cells are stacked to cool the battery cells or fix the cell assembly. In addition, in a battery pack including multiple battery modules, a thermally conductive adhesive may be applied to the outer side of each battery module.

Such a conventional battery module or battery pack may have various problems when a thermal event occurs. For example, when thermal runway occurs inside a battery module, heat generated from a trigger cell may spread to an adjacent battery cell or battery module through the thermally conductive adhesive. This triggers thermal runway propagation between the battery cells or battery modules.

Therefore, there is a need to develop a structure capable of preventing thermal runway propagation by suppressing thermal propagation between battery cells or battery modules through the thermally conductive adhesive when thermal runway occurs inside a battery module.

### DISCLOSURE

### Technical Problem

The present disclosure is designed to solve the problems of the related art, and therefore the present disclosure is directed to providing a battery module capable of minimizing high-temperature gases or flames generated from a battery cell in an abnormal situation of the battery module from moving to adjacent battery modules, thereby effectively preventing or delaying thermal runaway propagation between the modules.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a cell assembly including a plurality of battery cells; a module case configured to store the cell assembly; and a thermally conductive adhesive interposed between the cell assembly and the module case and configured such that a thermal-propagation inhibition section, at least a portion of which is thermally decomposed at a reference temperature, gradually expands.

The battery cells may be configured as pouch-type battery cells and stacked face to face such that a side from which an electrode lead does not extend faces downward, and the thermally conductive adhesive may be provided at a bottom of the cell assembly.

The module case may have a venting hole formed on an upper surface thereof and configured to discharge venting gas generated in the battery cell.

The thermally conductive adhesive may be used as a thermal propagation path for cooling the battery cell in a normal state, and may be configured such that the thermal-propagation inhibition section expands when a thermal event occurs to block a thermal propagation path between adjacent battery cells.

The thermal-propagation inhibition section may be configured to gradually expand along a stacking direction of the plurality of battery cells.

The thermal-propagation inhibition section may be configured to gradually expand along a longitudinal direction of the battery cell.

Each of the battery cells may have an electrode lead, and the thermal-propagation inhibition section may be configured to gradually expand along a direction in which the electrode lead extends.

In another aspect of the present disclosure, there is provided a battery pack including a battery module according to the present disclosure.

The battery pack according to the present disclosure may further include a pack case configured to store a plurality of battery modules, and a thermally conductive pack adhesive interposed between the module case and the pack case, and configured such that a thermal-propagation inhibition section, at least a portion of which is thermally decomposed at a reference temperature, gradually expands.

The thermal-propagation inhibition section may be configured to gradually expand along an arrangement direction of the plurality of battery modules.

The pack case may have a plurality of storage spaces configured to store the plurality of battery modules, respectively, and the thermally conductive pack adhesive may be provided in each of the storage spaces.

The thermal-propagation inhibition section in any of the storage spaces may be configured to expand to another adjacent storage space.

In another aspect of the present disclosure, there is provided a vehicle including a battery pack according to the present disclosure.

### Advantageous Effects

According to an implemented configuration of the present disclosure, in a battery module or battery pack including a plurality of battery cells stacked, cooling of the battery cells or battery module may be smoothly performed under normal conditions. In addition, when thermal runaway occurs in the battery module, the thermal propagation path to adjacent battery cells or battery modules may be blocked.

In particular, according to an implemented configuration of the present disclosure, when a battery module is in an abnormal state, high-temperature gas or flame generated from the battery cell may be minimized from moving to other adjacent battery modules, thereby effectively preventing or delaying the thermal runaway propagation between the modules. As a result, the safety and reliability of the battery module may be guaranteed.

Therefore, according to these aspects of the present disclosure, events due to thermal runaway of a battery pack including multiple battery modules or a device equipped with them, such as fire or explosion, may be prevented or delayed.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery module according to an embodiment of the present disclosure.
FIG. 2 is an exploded perspective view of a battery module according to an embodiment of the present disclosure.
FIG. 3 is a cross-sectional view of a battery module according to an embodiment of the present disclosure, which may be a cross-sectional view taken along line I - I' in FIG. 1.
FIG. 4 is a drawing illustrating a thermally conductive adhesive at least a portion of which is thermally decomposed when a thermal event occurs in a battery module according to an embodiment of the present disclosure.
FIG. 5 is a drawing illustrating a thermal-propagation inhibition section that gradually expands when a thermal event occurs in a battery module according to an embodiment of the present disclosure.
FIG. 6 is a drawing illustrating a thermally conductive adhesive at least a portion of which is thermally decomposed when a thermal event occurs in a battery module according to another embodiment of the present disclosure.
FIG. 7 is a drawing illustrating a thermal-propagation inhibition section that gradually expands when a thermal event occurs in a battery module according to another embodiment of the present disclosure.
FIG. 8 is an exploded perspective view schematically illustrating a configuration of a battery pack according to an embodiment of the present disclosure.
FIG. 9 is a cross-sectional view of a battery pack according to an embodiment of the present disclosure.
FIG. 10 is a drawing illustrating a thermal-propagation inhibition section that gradually expands when a thermal event occurs in a battery pack according to an embodiment of the present disclosure.
FIG. 11 is a schematically perspective view of a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, i.e., a stacking direction of the battery cells, the Y-axis direction may indicate a front-back direction perpendicular to the X-axis direction on the horizontal plane (X-Y plane), i.e., a longitudinal direction of the battery cell, and the Z-axis direction may indicate an up-down direction (vertical direction) perpendicular to both the X-axis direction and the Y-axis direction, i.e., a height direction of the battery cell.

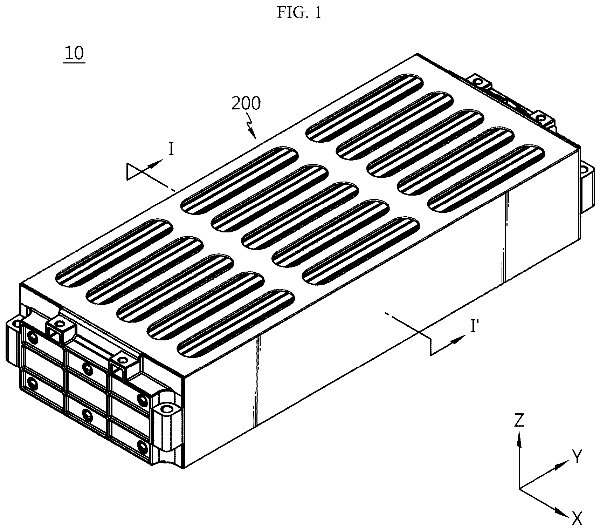

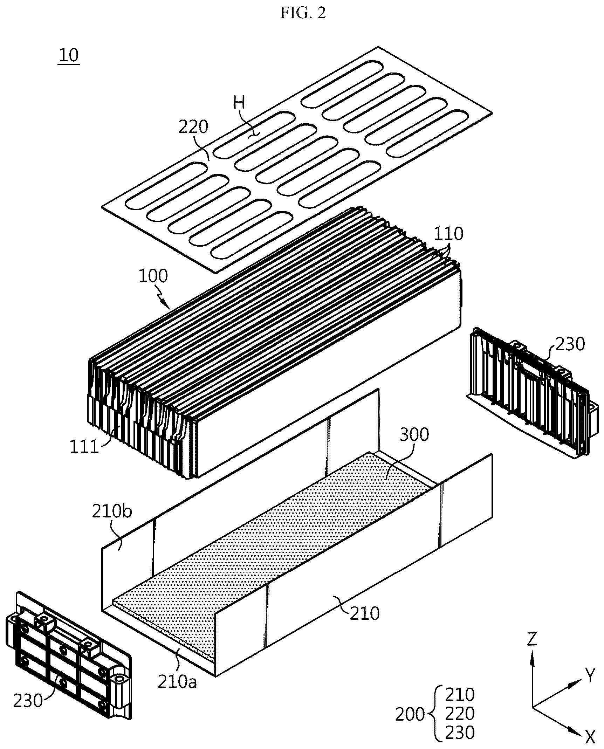

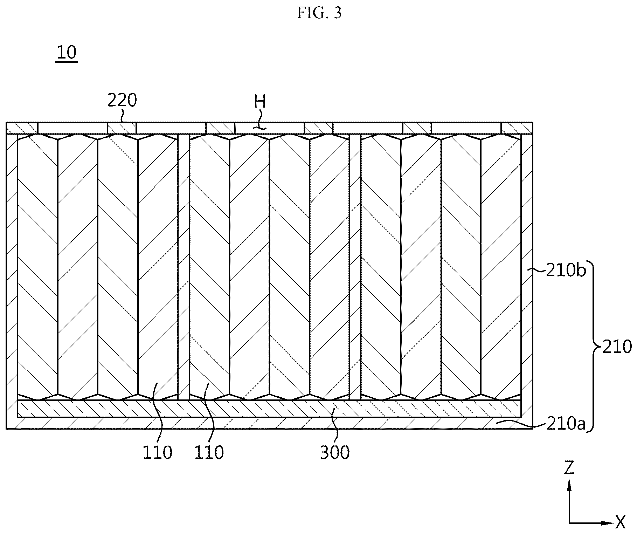

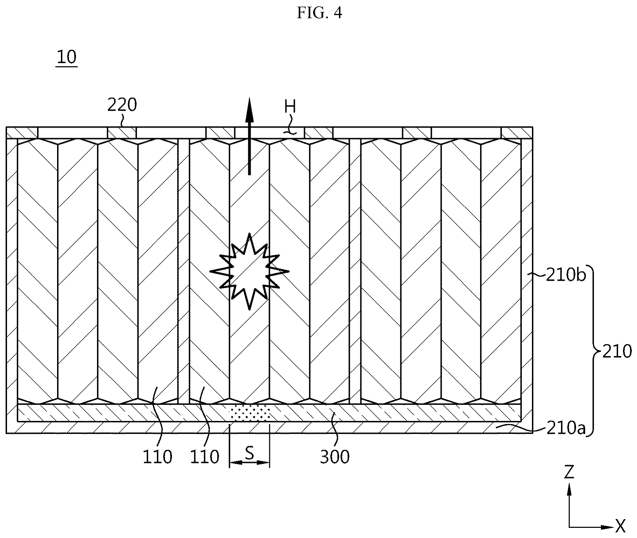

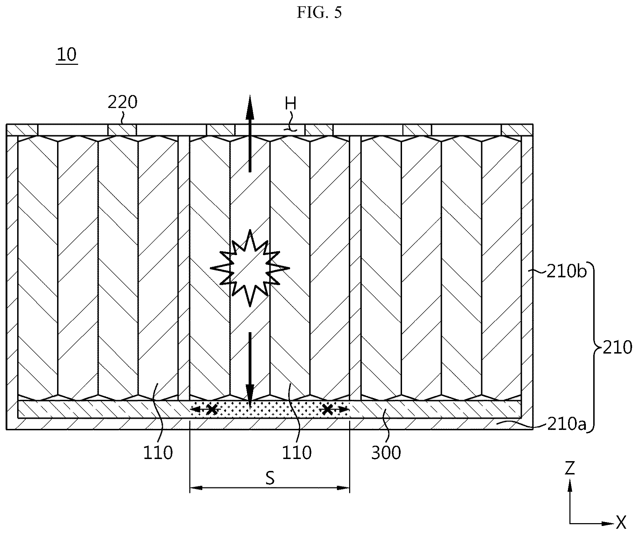

FIG. 1 is a perspective view of a battery module according to an embodiment of the present disclosure, FIG. 2 is an exploded perspective view of a battery module according to an embodiment of the present disclosure, and FIG. 3 is a cross-sectional view of a battery module according to an embodiment of the present disclosure, which may be a cross-sectional view taken along line I - I' in FIG. 1. FIG. 4 is a drawing illustrating a thermally conductive adhesive at least a portion of which is thermally decomposed when a thermal event occurs in a battery module according to an embodiment of the present disclosure. In addition, FIG. 5 is a drawing illustrating a thermal-propagation inhibition section that gradually expands when a thermal event occurs in a battery module according to an embodiment of the present disclosure.

Referring to FIGS. 1 to 5, the battery module 10 according to the present disclosure includes a cell assembly 100, a module case 200, and a thermally conductive adhesive 300.

The cell assembly 100 may include one or more battery cells 110, particularly, multiple battery cells 110. Here, each battery cell 110 may indicate one secondary battery, or may indicate a battery group comprised of multiple secondary batteries. In this specification, the battery cell 110 will be described as being one secondary battery.

The plurality of battery cells 110 may include an electrode assembly, a cell case that stores the electrode assembly, and an electrode lead 111 that is connected to the electrode assembly and extends outside the cell case to function as an electrode terminal.

A pair of electrode leads 111 may be provided, and the pair of electrode leads 111 may extend from both ends of the battery cell 110, that is, in the longitudinal direction (±Y direction). In this case, the pair of electrode leads 111 may be a positive electrode lead and a negative electrode lead. The battery cell 110 may be configured such that two electrode leads 111 are located only at one end in the Y-axis direction, for example, at the end in the +Y-axis direction as necessary.

In this case, the shape of the battery case may be configured in various ways, and depending on the shape of the battery case, the battery cells 110 may be classified into a pouch-type cell, a cylindrical cell, and a prismatic cell. Since the types of these battery cells 110 were widely known at the time of filing the present disclosure, a detailed description thereof will be omitted. The present disclosure is applicable to all types of secondary batteries known at the time of filing the present disclosure, and is not limited to a specific type of secondary battery.

In the cell assembly 100, the plurality of battery cells 110 may be configured to be stacked in at least one direction. For example, a plurality of battery cells 110 may be stacked side by side in a horizontal direction, particularly, in the left-right direction (X-axis direction), as shown in FIG. 2. In addition, a plurality of battery cells 110 provided in the cell assembly 100 may be electrically connected to each other in series and/or in parallel through a bus-bar (not shown).

Referring to FIG. 2, the module case 200 may be configured to store the cell assembly 100. Specifically, a storage space may be formed in the module case 200, and the cell assembly 100 may be stored in the storage space.

For example, the module case 200 may include a case body 210, a top plate 220, and an end plate 230, thereby confining the storage space. In addition, the cell assembly 100 may be positioned in the storage space confined as described above. The module case 200 may be at least partially configured as metal and/or plastic materials.

At least some of the plates constituting the module case 200 may be configured in an integrated form. For example, the module case 200 may have a case body 210 in a U-frame shape in which a lower plate 210a, a left plate, and a right plate 210b are integrated with each other, as shown in FIG. 2, and the top plate 220 and the end plate 230 may be configured to cover or seal the top, front, and rear of the case body 210.

In this case, various fastening methods such as welding, bonding, bolting, and hooking may be used for the coupling of the top plate 220, the end plate 230, and the case body 210.

Alternatively, the module case 200 may be manufactured as a mono-frame in which the top plate 220 and the case body 210 are integrated with each other. Alternatively, respective plates may be manufactured separately and then coupled to each other by welding or the like to configure the module case 200. However, the present disclosure is not limited to a specific material or form of the module case 200.

The thermally conductive adhesive 300 may be interposed between the cell assembly 100 and the module case 200. For example, referring to FIG. 2, the thermally conductive adhesive 300 may be provided between one side of the cell assembly 100, for example, the bottom of the cell assembly 100, and the lower surface 210a of the module case 200.

Meanwhile, although the various drawings of this specification illustrate the thermally conductive adhesive 300 positioned at the bottom of the battery module 10, the thermally conductive adhesive 300 may be positioned on another side, such as the top of the battery module 10. In addition, the thermally conductive adhesive 300 may be positioned on two or more sides of the battery module 10. For example, the thermally conductive adhesive 300 may be applied to the upper side and the lower side of the cell assembly 100, respectively.

The thermally conductive adhesive 300 may be configured to transfer heat between the cell assembly 100 and the module case 200. The battery cell 110 may generate heat during use, and if this heat is not properly discharged, the performance of the battery cell 110 cannot be stably guaranteed, and in severe cases, it may lead to thermal runaway, ignition, explosion, or the like of the battery cell. In this aspect, the heat generated in the battery cell 110 needs to be properly discharged to the outside through the module case 200. In this case, the thermally conductive adhesive 300 may ensure good thermal propagation between the battery cell 110 and the module case 200, thereby securing stable cooling performance for the battery module 10.

The thermally conductive adhesive 300 may have a material capable of transferring heat. In particular, the thermally conductive adhesive 300 may be made of a resin material, and in this case, the thermally conductive adhesive 300 may be referred to as a thermal resin. The thermally conductive adhesive 300 may include at least one material among various materials, such as urethane, silicone, and epoxy. The thermally conductive adhesive 300 may be expressed by other terms such as a TIM (Thermal Interface Material), potting resin, etc., and various thermally conductive adhesives or TIMs known at the time of filing of the present disclosure may be used as a material of the thermally conductive adhesive 300 of the battery module 10 according to the present disclosure.

The thermally conductive adhesive 300 may be interposed between all battery cells 110 provided in the cell assembly 100 and the module case 200. That is, the thermally conductive adhesive 300 may be configured to be in direct contact with all battery cells 110 included in the cell assembly 100. According to this implemented configuration of the present disclosure, heat dissipation may be attained through the thermally conductive adhesive 300 for all battery cells 110 included in the battery module 10. Therefore, the overall cooling performance of the battery module 10 may be further improved.

In addition, the thermally conductive adhesive 300 may be configured to fix the cell assembly 100 to the module case 200. To this end, the thermally conductive adhesive 300 may have an adhesive component. For example, as shown in FIG. 3, when the thermally conductive adhesive 300 is positioned at the bottom of the cell assembly 100, the thermally conductive adhesive 300 may fix the bottom of the cell assembly 100 to the lower surface 210a of the module case 200.

This thermally conductive adhesive 300 may be applied to the lower surface 210a of the module case 200 before the cell assembly 100 is stored in the module case 200 and then cured over time.

Referring to FIGS. 4 and 5, the thermally conductive adhesive 300 may be configured such that at least a portion thereof is thermally decomposed at a reference temperature. That is, the thermally conductive adhesive 300 may be decomposed by heat when a thermal event occurs in a battery cell 110. Thermal decomposition indicates a reaction in which weak bonds are broken when heat is applied to a substance to activate molecules. When the thermally conductive adhesive 300 made of an organic compound such as a thermal resin is thermally decomposed, thermal conductivity may be reduced.

In this case, the reference temperature may indicate a temperature at which the thermally conductive adhesive 300 begins to be thermally decomposed due to a thermal event occurring in the battery cell 110. For example, the reference temperature may be configured higher than a normal operating temperature of the battery cell 110. The normal operating temperature of the battery cell 110 may indicate the temperature when no thermal event occurs in the battery cell 110. In addition, the normal operating temperature of the battery cell 110 may indicate the temperature at which the battery cell 110 is repeatedly charged and discharged as usual. For example, the normal operating temperature of the battery cell 110 may be approximately 60 degrees C. In addition, the reference temperature may be configured lower than a self-heating temperature of the battery cell 110.

The position of the thermally conductive adhesive 300, which is thermally decomposed, may be defined as a thermal-propagation inhibition section S. Referring to FIG. 5, this thermal-propagation inhibition section S may be configured to gradually expand. That is, a portion of the thermally conductive adhesive 300, which is thermally decomposed such that the thermal conductivity decreases, may gradually expand. The length or volume of the thermally conductive adhesive 300 to be thermally decomposed may gradually increase. The thermal-propagation inhibition section S may be configured to gradually expand from a portion in contact with a battery cell 110 where a thermal event occurs to an adjacent portion as heat transfers to an adjacent battery cell 110. The thermal-propagation inhibition section S may expand along the horizontal direction in which the thermally conductive adhesive 300 is applied.

That is, the thermally conductive adhesive 300 may be used as a thermal propagation path for cooling the battery cell 110 in a normal state, and the thermal-propagation inhibition section S may be configured to expand when a thermal event occurs to block the thermal propagation path between adjacent battery cells 110.

In particular, as shown in the embodiment of FIG. 5, the thermal-propagation inhibition section S may be configured to gradually expand along the stacking direction (X-axis direction) of the plurality of battery cells 110.

According to the above-implemented configuration of the present disclosure, the cooling of the cell assembly 100 may be smoothly performed in a normal state. In addition, when thermal runaway occurs in the battery module 10, heat may be blocked from spreading to an adjacent battery cell 110 or battery module 10 through the thermally conductive adhesive 300.

As a result, according to the above-implemented configuration of the present disclosure, in an abnormal situation of the battery module 10, high-temperature gas or flame generated from the battery cell 110 may be minimized from moving to another adjacent battery module 10, thereby effectively preventing or delaying the thermal runaway propagation in the battery module 10. As a result, the safety and reliability of the battery module 10 may be guaranteed.

In particular, as in the embodiment illustrated in FIG. 2, the battery cells 110 may be configured as pouch-type battery cells, and may be stacked face to face so that the side (the side where a sealing portion is not provided) from which the electrode lead 111 does not extend faces downward. In this case, the battery cells 110 may have a sealing portion facing in the front-back direction (Y-axis direction) and upward direction (+Z-axis direction) and a receiving portion facing in the left-right direction (X-axis direction).

The thermally conductive adhesive 300 may be provided at the bottom of the cell assembly 100. That is, as shown in the embodiment in FIGS. 2 to 5, the thermally conductive adhesive 300 may be configured to be provided only at the bottom of the cell assembly 100 and to fix the bottom of the cell assembly 100.

Meanwhile, the module case 200 may have a venting hole H. The venting hole H may be configured to discharge venting gas generated from the battery cell 110 to the outside. The venting hole H may enable directional venting in one direction. A plurality of venting holes H may be provided at regular intervals along the horizontal direction (X-axis and Y-axis directions).

For example, as shown in FIGS. 1 to 5, the venting holes H may be formed on the upper surface of the module case 200. Accordingly, directional venting toward the top of the battery module 10 may be performed through the venting holes H formed on the upper surface of the module case 200.

According to the above-implemented configuration of the present disclosure, in a situation where one of the battery cells 110 undergoes thermal runaway and gas or the like is generated, the gas or the like may be quickly vented in a specific direction. Accordingly, the venting gas or flame generated inside the battery module 10 may be smoothly discharged to the outside of the battery module 10, so that the thermal runaway propagation between the battery modules 10 may be effectively prevented or delayed.

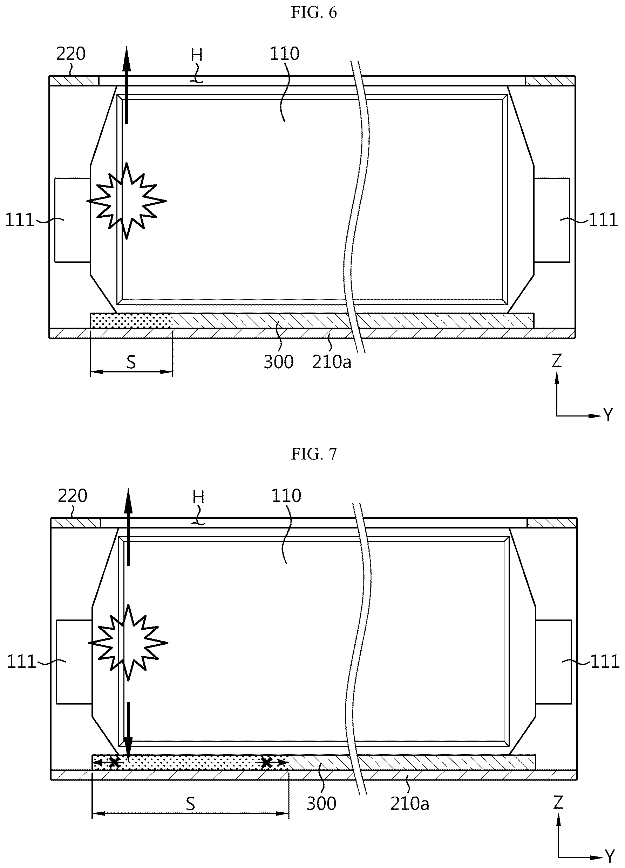

FIG. 6 is a drawing illustrating a thermally conductive adhesive at least a portion of which is thermally decomposed when a thermal event occurs in a battery module according to another embodiment of the present disclosure, and FIG. 7 is a drawing illustrating a thermal-propagation inhibition section that gradually expands when a thermal event occurs in a battery module according to another embodiment of the present disclosure.

Referring to FIGS. 6 and 7, the thermal-propagation inhibition section S may be configured to gradually expand along the longitudinal direction (Y-axis direction) of the battery cell 110. The thermal-propagation inhibition section S may expand not only along the stacking direction of the battery cell 110 but also along the longitudinal direction of the battery cell 110. In particular, the thermal-propagation inhibition section S may be configured to gradually expand along the direction in which the electrode lead 111 extends.

If a thermal event occurs in a battery cell 110 and venting gas or flame is generated, the gas or flame is more likely to be ejected toward the sealing portion of the battery cell 110 where the electrode lead 111 is positioned. According to the above-implemented configuration of the present disclosure, as shown in the embodiments of FIGS. 6 and 7, even if a thermal event occurs in a battery cell 110 and flame or spark is generated at the electrode lead 111 provided on one side of the battery cell 110, the thermal-propagation inhibition section S may expand along the direction in which the electrode lead 111 extends, thereby suppressing or blocking the gas or flame from moving to the electrode lead 111 provided on the other side.

Accordingly, it is possible to prevent components positioned at both ends of the battery module 10, such as the end plate 230 or components adjacent to a bus-bar frame (not shown), from being subjected to heat damage or structural collapse. In addition, it is possible to minimize thermal propagation to an adjacent battery module 10 due to flames or the like discharged to the outside through the end plate 230.

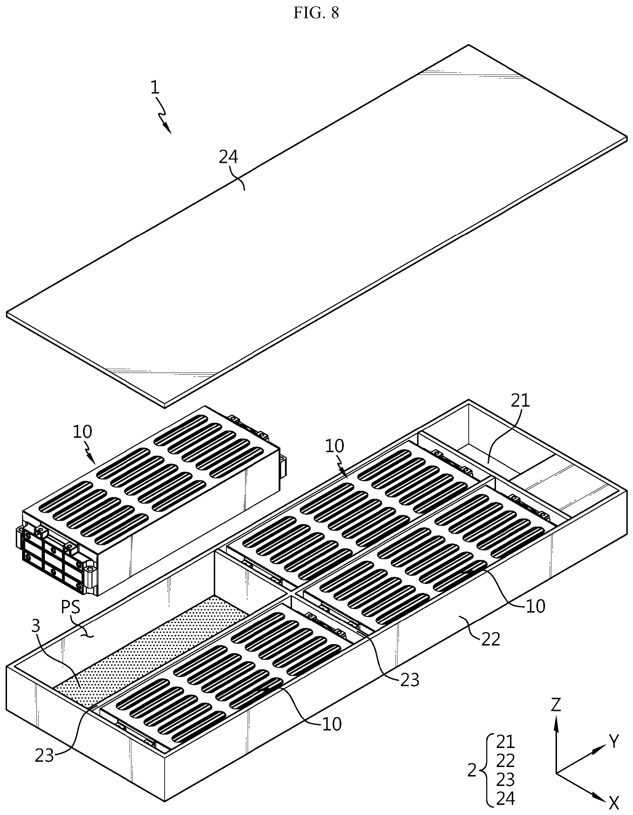

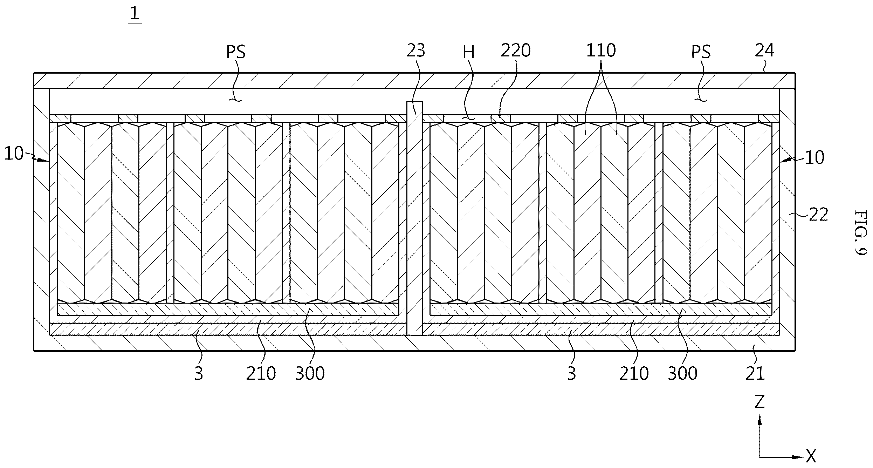

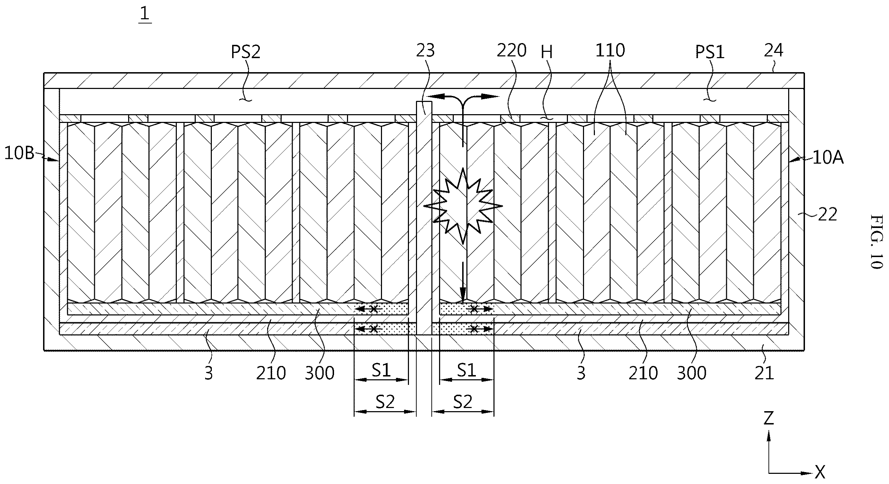

FIG. 8 is an exploded perspective view schematically illustrating a configuration of a battery pack according to an embodiment of the present disclosure, FIG. 9 is a cross-sectional view of a battery pack according to an embodiment of the present disclosure, and FIG. 10 is a drawing illustrating a thermal-propagation inhibition section that gradually expands when a thermal event occurs in a battery pack according to an embodiment of the present disclosure.

Referring to FIGS. 8 to 10, a battery pack 1 according to an embodiment of the present disclosure may include one or more battery modules 10 described above according to an embodiment of the present disclosure.

In addition, the battery pack 1 according to an embodiment of the present disclosure may further include a pack case 2. The pack case 2 may be configured to store a plurality of battery modules 10. The pack case 2 may have a plurality of storage spaces PS configured to store the plurality of battery modules 10. The plurality of battery modules 10 may be arranged along a plurality of rows and columns inside the pack case 2. The pack case 2 may be configured to have the plurality of battery modules 10 seated therein.

The pack case 2 may be formed in a cuboid shape. More specifically, the pack case 2 may include a base frame 21, a side frame 22, a cross-beam 23, and a pack lid 24.

The base frame 21 may form a lower surface of the pack case 2 and may be configured as an approximately square plate. In addition, the base frame 21 may have a flat upper surface so that the plurality of battery modules 10 may be stably seated thereon.

The side frame 22 may extend upward from respective edges of the base frame 21. The side frame 22 may have a plurality of unit walls to surround the battery module 10. More specifically, the side frame 22 may include a rear wall positioned at an end of the base frame 21 in the +Y direction, a right wall positioned at an end in the -X direction, a front wall positioned at an end in the -Y direction, and a left wall positioned at an end in the +X direction to form the side surfaces of the pack case 2.

The cross-beam 23 may be configured to partition between a plurality of battery modules 10. That is, the cross-beam 23 may be configured to partition the space into a plurality of storage spaces PS. For example, the cross-beam 23 may be configured in the form of a partition that extends in the left-right direction so as to be interposed between battery modules 10 that are disposed adjacently in the front-back direction. In addition, the cross-beam 23 may be configured in the form of a partition that extends in the front-back direction so as to be interposed between battery modules 10 that are disposed adjacently in the left-right direction.

The above pack lid 24 may be configured to cover the top of the plurality of battery modules 10. The pack lid 24 may be provided to be coupled to the upper side of the side frame 22 to form the upper surface of the pack case 2.

In addition, although not shown in the drawing, the pack case 2 may be configured to store components such as a BMS (Battery Management System), a current sensor, and a fuse for integrated control of charging and discharging of one or more battery cells 110 inside.

The battery pack 1 according to an embodiment of the present disclosure may further include a thermally conductive pack adhesive 3. The thermally conductive pack adhesive 3 may be made of the same material as the thermally conductive adhesive 300 at a different position. That is, the thermally conductive pack adhesive 3 may also transfer heat between the battery module 10 and the pack case 2, and may be configured to fix the battery module 10 to the pack case 2.

The thermally conductive pack adhesive 3 may be interposed between the module case 200 and the pack case 2. For example, referring to FIGS. 8 to 10, the thermally conductive pack adhesive 3 may be provided between the lower surface 210a of the battery module 10 and the base frame 21 of the pack case 2. That is, the thermally conductive adhesive 300 may be provided on the inner side of the battery module 10, and the thermally conductive pack adhesive 3 may be provided on the outer side of the battery module 10.

In addition, the thermally conductive pack adhesive 3 may be provided in each storage space PS. That is, the thermally conductive pack adhesive 3 may be provided for each of the plurality of battery modules 10. Accordingly, the thermally conductive pack adhesives 3 may be disposed along a plurality of columns and rows.

In addition, referring to FIG. 10, the thermally conductive pack adhesive 3 may be configured such that at least a portion thereof is thermally decomposed at a reference temperature. In addition, the thermally conductive pack adhesive 3 may be configured such that the thermal-propagation inhibition section S gradually expands. Accordingly, the sections S1 and S2 may gradually expand from the battery module 10 where the thermal event occurs to an adjacent battery module 10 as heat is conducted to the adjacent battery module 10.

The thermal-propagation inhibition sections S1 and S2 may expand along the horizontal direction in which the thermally conductive pack adhesive 3 is applied. In addition, the thermal-propagation inhibition sections S1 and S2 may be configured to gradually expand along the arrangement direction of the plurality of battery modules 10. In particular, referring to the embodiment illustrated in FIG. 10, the thermal-propagation inhibition sections S1 and S2 in a storage space PS1 may be configured to expand to another adjacent storage space PS2. That is, the thermal-propagation inhibition sections S1 and S2 may expand beyond the cross-beam 23 to another storage space PS.

More specifically, when a thermal event occurs in a battery cell 110 of a battery module 10A, heat may be sequentially transferred along the thermally conductive adhesive 300 provided on the side of the battery cell 110, the thermally conductive pack adhesive 3 provided on the outer side of the battery module 10A, the thermally conductive pack adhesive 3 provided on the outer side of the adjacent battery module 10B, the thermally conductive adhesive 300 provided on the inner side of the adjacent battery module 10B, and the battery cell 110 of the adjacent battery module 10B.

However, according to the above-implemented configuration of the present disclosure, when a thermal event occurs in a battery cell 110 of a battery module 10A, the thermally conductive adhesive 300 provided on the side of the battery cell 110 may be thermally decomposed to form thermal-propagation inhibition sections S1 and S2, and the thermal-propagation inhibition sections S1 and S2 may gradually expand toward the adjacent battery module 10B.

Therefore, according to the above-implemented configuration of the present disclosure, the cooling of the battery module 10 may be smoothly performed in a normal state. In addition, when thermal runaway occurs in the battery module 10, heat may be blocked from being transferred to the adjacent battery module 10 through the thermally conductive pack adhesive 3.

Accordingly, when the battery module 10 is in an abnormal state, the high-temperature gas or flame generated in the battery module 10 may be minimized from moving to other adjacent battery modules 10, thereby effectively preventing or delaying the thermal runaway propagation in the battery pack 1. Therefore, the safety and reliability of the battery pack 1 may be guaranteed.

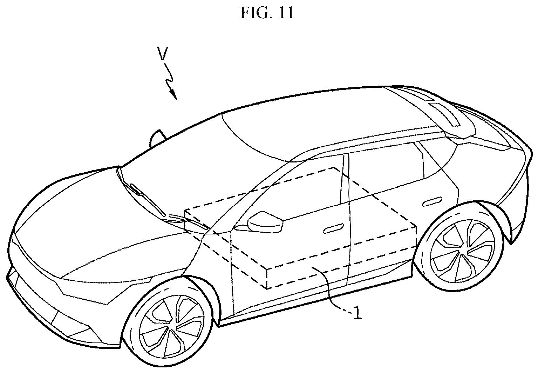

FIG. 11 is a schematically perspective view of a vehicle according to an embodiment of the present disclosure.

Referring to FIG. 11, a vehicle V according to an embodiment of the present disclosure may include one or more battery packs 1 according to an embodiment of the present disclosure. The vehicle V according to the present disclosure may be, for example, an electric vehicle, a hybrid vehicle, or a plug-in hybrid vehicle. The vehicle V may include a four-wheel vehicle and a two-wheel vehicle. The vehicle V may be operated by power supplied from the battery pack 1 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a cell assembly comprising a plurality of battery cells;
a module case configured to store the cell assembly; and
a thermally conductive adhesive interposed between the cell assembly and the module case and configured such that a thermal-propagation inhibition section, at least a portion of which is thermally decomposed at a reference temperature, gradually expands.

2. The battery module according to claim 1,
wherein the battery cells are configured as pouch-type battery cells and stacked face to face such that a side from which an electrode lead does not extend faces downward, and
wherein the thermally conductive adhesive is provided at a bottom of the cell assembly.

3. The battery module according to claim 1,
wherein the module case has a venting hole formed on an upper surface thereof and configured to discharge venting gas generated in the battery cell.

4. The battery module according to claim 1,
wherein the thermally conductive adhesive is used as a thermal propagation path for cooling the battery cell in a normal state, and is configured such that the thermal-propagation inhibition section expands when a thermal event occurs to block a thermal propagation path between adjacent battery cells.

5. The battery module according to claim 1,
wherein the thermal-propagation inhibition section is configured to gradually expand along a stacking direction of the plurality of battery cells.

6. The battery module according to claim 1,
wherein the thermal-propagation inhibition section is configured to gradually expand along a longitudinal direction of the battery cell.

7. The battery module according to claim 1,
wherein each of the battery cells has an electrode lead, and
wherein the thermal-propagation inhibition section is configured to gradually expand along a direction in which the electrode lead extends.

8. A battery pack comprising a battery module according to any one of claims 1 to 7.

9. The battery pack according to claim 8, further comprising
a pack case configured to store a plurality of battery modules, and
a thermally conductive pack adhesive interposed between the module case and the pack case, and configured such that a thermal-propagation inhibition section, at least a portion of which is thermally decomposed at a reference temperature, gradually expands.

10. The battery pack according to claim 9,
wherein the thermal-propagation inhibition section is configured to gradually expand along an arrangement direction of the plurality of battery modules.

11. The battery pack according to claim 9,
wherein the pack case has a plurality of storage spaces configured to store the plurality of battery modules, respectively, and
wherein the thermally conductive pack adhesive is provided in each of the storage spaces.

12. The battery pack according to claim 11,
wherein the thermal-propagation inhibition section in any of the storage spaces is configured to expand to another adjacent storage space.

13. A vehicle comprising a battery pack according to any one of claims 8 to 12.
